# FASCICULE DE BREVET EUROPEEN

(11) **EP 2 856 129 B1**
(45) Date de publication et mention de la délivrance du brevet: **06.10.2021**
(21) Numéro de dépôt: 13726535.1
(22) Date de dépôt: 04.06.2013
(51) Int. Cl.: G01N 27/22

(54) **CAPTEUR D'HUMIDITE CAPACITIF A ELECTRODE DE GRAPHENE**
KAPAZITIVES FEUCHTE-MESSELEMENT MIT GRAPHEN ELEKTRODE
CAPACITIVE HUMIDITY SENSOR WITH GRAPHENE ELECTRODE

(30) Priorité: 04.06.2012 FR 1255178
(43) Date de publication de la demande: 08.04.2015
(73) Titulaire: Commissariat à l'Énergie Atomique et aux Énergies Alternatives, 75015 Paris (FR)
(72) Inventeur: ALIANE, Abdelkader, F-38100 Grenoble (FR); VERILHAC, Jean-Marie, F-38500 COUBLEVIE (FR)
(74) Mandataire: Brevalex
(86) Numéro de dépôt international: PCT/EP2013/061438
(87) Numéro de publication internationale: WO 2013/182542

(56) Documents cités:
- EP-A1- 1 434 048
- RITTERSMA Z M ET AL: "A monitoring instrument with capacitive porous silicon humidity sensors; Porous silicon humidity sensors", SMART MATERIALS AND STRUCTURES, IOP PUBLISHING LTD., BRISTOL, GB, vol. 9, no. 3, 1 juin 2000 (2000-06-01), pages 351-356, XP020071370, ISSN: 0964-1726, DOI: 10.1088/0964-1726/9/3/316
- JUHASZ L ET AL: "A simple humidity sensor with thin film porous alumina and integrated heating", PROCEDIA ENGINEERING, ELSEVIER, AMSTERDAM, NL, vol. 5, 1 janvier 2010 (2010-01-01), pages 701-704, XP027483762, ISSN: 1877-7058, DOI: 10.1016/J.PROENG.2010.09.206 [extrait le 2010-10-25]
- BELIC L I ET AL: "AES, AFM and TEM studies of NiCr thin films for capacitive humidity sensors", THIN SOLID FILMS, ELSEVIER-SEQUOIA S.A. LAUSANNE, CH, vol. 317, no. 1-2, 1 avril 1998 (1998-04-01), pages 173-177, XP004147637, ISSN: 0040-6090, DOI: 10.1016/S0040-6090(97)00615-9
- SAKAI ET AL: "Humidity sensors using chemically modified polymeric materials", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 13, no. 1-3, 1 mai 1993 (1993-05-01), pages 82-85, XP026588274, ISSN: 0925-4005, DOI: 10.1016/0925-4005(93)85329-9 [extrait le 1993-05-01]
- R R NAIR ET AL: "Unimpeded permeation of water through helium-leak-tight graphene-based membranes", SCIENCE, vol. 335, 27 janvier 2012 (2012-01-27), pages 442-444, XP055042954, DOI: 10.1126/science.1211694
- RITTERSMA Z M ET AL: "A monitoring instrument with capacitive porous silicon humidity sensors; Porous silicon humidity sensors", SMART MATERIALS AND STRUCTURES, IOP PUBLISHING LTD., BRISTOL, GB, vol. 9, no. 3, 1 June 2000 (2000-06-01), pages 351-356, XP020071370, ISSN: 0964-1726, DOI: 10.1088/0964-1726/9/3/316
- DUCERE V ET AL: "A capacitive humidity sensor using cross-linked cellulose acetate butyrate", SENSORS AND ACTUATORS B: CHEMICAL, ELSEVIER BV, NL, vol. 106, no. 1, 29 April 2005 (2005-04-29), pages 331-334, XP027810397, ISSN: 0925-4005 [retrieved on 2005-04-29]

## Description

### DOMAINE TECHNIQUE

L'invention se rapporte au domaine des dispositifs de détection ou de mesure capacitifs en particulier ceux mis en œuvre pour la détection et/ou la mesure d'humidité.

Elle concerne un dispositif capteur d'humidité amélioré, adapté à une détection ou une mesure de faible taux d'humidité et dont la structure permet de réaliser des mesures selon une fréquence de mesures importante ainsi qu'un procédé de réalisation d'un tel capteur.

### ÉTAT DE LA TECHNIQUE ANTÉRIEURE

La mesure d'humidité relative par mesure de variation d'impédance est une technique couramment utilisée.

Parmi les dispositifs de mesure d'humidité relative par mesure de variation d'impédance on distingue ceux utilisant des capteurs de type capacitif comprenant une couche de matériau diélectrique sensible prévue pour absorber l'humidité environnante.

Dans un tel capteur, la couche de matériau diélectrique est localisée entre deux électrodes, le tout formant un condensateur. Lorsque l'humidité varie, la quantité d'eau absorbée par ladite couche de matériau diélectrique varie également, ce qui entraine une modification de la constante diélectrique de cette couche, et une variation de la capacité du condensateur, que l'on mesure. Cette variation peut être importante du fait de la valeur élevée de la constante diélectrique de l'eau qui est de l'ordre de 80.

Le document de JUHASZ L et al. « A simple humidity sensor with thin film porous alumina and integrated heating », Procedia Engineering Vol.5, 2010 présente par exemple un capteur d'humidité dans lequel l'humidité vient se loger dans une couche d'alumine.

La fréquence de détection d'un tel capteur est limitée par le temps de séchage de cette couche d'alumine. Un autre exemple de capteur d'humidité de type capacitif est décrit dans Ducéré et al. "A capacitive humidity sensor using cross-linked cellulose acetate butyrate", Sensors and actuators B, vol. 106 (2005) pages 331-334.

Le séchage du capteur peut en effet poser problème et empêcher de mettre en œuvre une pluralité de mesures consécutives rapprochées.

Il se pose le problème de trouver un nouveau capteur d'humidité, de sensibilité améliorée, et prévu pour une détection de faible taux d'humidité.

### EXPOSÉ DE L'INVENTION

L'invention concerne la réalisation d'un dispositif de détection et/ou de mesure d'humidité doté d'un capteur capacitif de sensibilité améliorée.

Pour cela, l'invention propose un capteur de type capacitif comportant une électrode supérieure formée d'au moins une couche à base d'un matériau conducteur donné perméable à l'humidité, et en contact avec une zone diélectrique de perméabilité inférieure à celle de la couche de matériau conducteur.

Ainsi, suivant l'invention, on favorise une détection d'humidité à proximité de l'interface entre la zone diélectrique et la couche de matériau conducteur donné appartenant à l'électrode du capteur.

Dans l'empilement de couches du capteur l'humidité que l'on détecte est située en moyenne plus proche de l'extérieur du capteur que dans les capteurs suivant l'art antérieur, ce qui permet de réaliser un meilleur séchage, et ainsi de réaliser un nombre de mesures plus importantes dans un laps de temps donné qu'avec des capteurs capacitifs à diélectrique poreux.

La zone diélectrique a avantageusement une faible perméabilité à l'humidité.

La zone diélectrique peut être avantageusement non poreuse ou avoir une très faible porosité, c'est à dire un taux de porosité maximum inférieur à 8%.

La zone diélectrique peut être en particulier dotée de pores ayant une dimension maximale, encore appelée diamètre, inférieure à 4 nm.

La zone diélectrique peut également être à base d'un matériau ayant une faible affinité avec les molécules d'eau.

La zone diélectrique peut être avantageusement hydrophobe.

La zone diélectrique repose sur une électrode inférieure du capteur.

Le matériau de l'électrode supérieure est selon l'invention du graphène. L'adsorption de molécules d'eau par le graphène permet de modifier son gap.

Le graphène est conducteur électrique et présente une sensibilité à l'humidité, la présence de molécules d'eau dans le graphène pouvant rendre celui-ci semi-conducteur en augmentant son gap.

L'électrode supérieure peut comprendre une couche de graphène formée de plusieurs sous-couches atomiques empilées.

Cette couche de graphène peut avoir une épaisseur comprise par exemple entre 100 nm et 5 µm.

Des molécules d'eau sont susceptibles de venir s'insérer entre des sous-couches atomiques, et modifier ainsi le gap du matériau de l'électrode supérieure.

Des trous traversant la couche formant la l'électrode supérieure peuvent être avantageusement prévus afin d'améliorer sa perméabilité à l'humidité.

Ces trous peuvent également permettre d'améliorer le séchage.

Au moins un trou parmi lesdits trous peut traverser en outre la zone de matériau diélectrique et dévoiler l'électrode inférieure.

Le capteur peut comporter une alternance de trous dévoilant l'électrode supérieure et de trous dévoilant l'électrode inférieure.

Afin d'améliorer la sensibilité de détection, une mono-couche hydrophile dite « auto-assemblée » peut être également prévue sur une région, en particulier métallique, de l'électrode supérieure dévoilée par un trou formé dans ladite couche de matériau conducteur donné et reposant sur ladite zone diélectrique.

Afin d'améliorer la sensibilité de détection, une mono-couche hydrophile dite « auto-assemblée » peut être également prévue sur une région, en particulier métallique, de l'électrode inférieure dévoilée par un trou formé dans ladite couche de matériau conducteur donné et traversant ladite zone diélectrique.

Selon une possibilité de mise en œuvre du capteur, l'électrode supérieure peut être recouverte d'une couche de protection hydrophobe ajourée.

Les électrodes du capteur peuvent être disposées sur un support souple, par exemple à base d'un matériau polymère.

La présente invention concerne en outre un dispositif de mesure ou de détection de température doté d'un capteur tel que défini plus haut.

Selon un autre aspect, la présente invention concerne un procédé de réalisation d'un capteur d'humidité de type capacitif comprenant des étapes consistant à :
- former sur un support au moins une couche conductrice d'une première électrode,
- former au moins une zone de matériau diélectrique sur ladite couche conductrice de ladite première électrode,
- former sur la dite couche de matériau diélectrique d'une couche d'un matériau conducteur donné présentant une perméabilité à l'humidité supérieure à celle de ladite zone de matériau diélectrique avec laquelle elle se trouve en contact.

Le matériau donné est selon l'invention du graphène.

Le procédé peut comprendre après la formation de la zone de matériau diélectrique et préalablement à la formation de la couche de matériau conducteur donné, des étapes consistant à :
- former un masquage sacrificiel sur la zone de matériau diélectrique, puis
- former au moins une zone métallique sur la zone de matériau diélectrique à travers des ouvertures du masquage sacrificiel dévoilant la zone de matériau diélectrique,
- retirer le masquage sacrificiel, ladite couche de matériau conducteur donné étant ensuite réalisée autour de ladite zone métallique avec un trou dévoilant cette zone métallique.

Après l'étape de retrait du masquage sacrificiel, une étape consistant à déposer une couche SAM hydrophile sur la zone métallique peut être prévue.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1, illustre un premier exemple d'agencement de capteur d'humidité de type capacitif, ayant au moins une électrode supérieure perméable à l'humidité reposant sur une zone diélectrique peu ou pas perméable à l'humidité ;
- la figure 2, illustre un deuxième exemple d'agencement de capteur d'humidité de type capacitif suivant l'invention ayant au moins une électrode supérieure perméable à l'humidité reposant sur une zone diélectrique peu perméable ou non perméable à l'humidité ;
- la figure 3 illustre un troisième exemple d'agencement de capteur d'humidité de type capacitif suivant l'invention ayant au moins une électrode supérieure perméable à l'humidité reposant sur une zone diélectrique faiblement perméable ou non perméable à l'humidité ;
- la figure 4 illustre un quatrième exemple d'agencement de capteur d'humidité de type capacitif suivant l'invention comportant au moins une électrode supérieure perméable à l'humidité reposant sur une zone diélectrique peu perméable ou non perméable à l'humidité ;
- les figures 5 et 6 illustrent des résultats de mesures réalisées à l'aide d'un capteur d'humidité tel que mis en œuvre suivant l'invention,
- les figures 7A à 7D, illustrent un premier exemple de procédé de réalisation d'un capteur d'humidité de type capacitif suivant l'invention,
- les figures 8A à 8G, illustrent un autre exemple de procédé de réalisation d'un capteur d'humidité suivant l'invention,
- la figure 9 illustre un exemple de traitement pour rendre le capteur d'humidité de type capacitif suivant l'invention sensible aux variations de températures ;
- la figure 10 illustre l'effet sur son coefficient TCR d'un ajout de particules d'Ag d'un matériau constitué de graphène.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

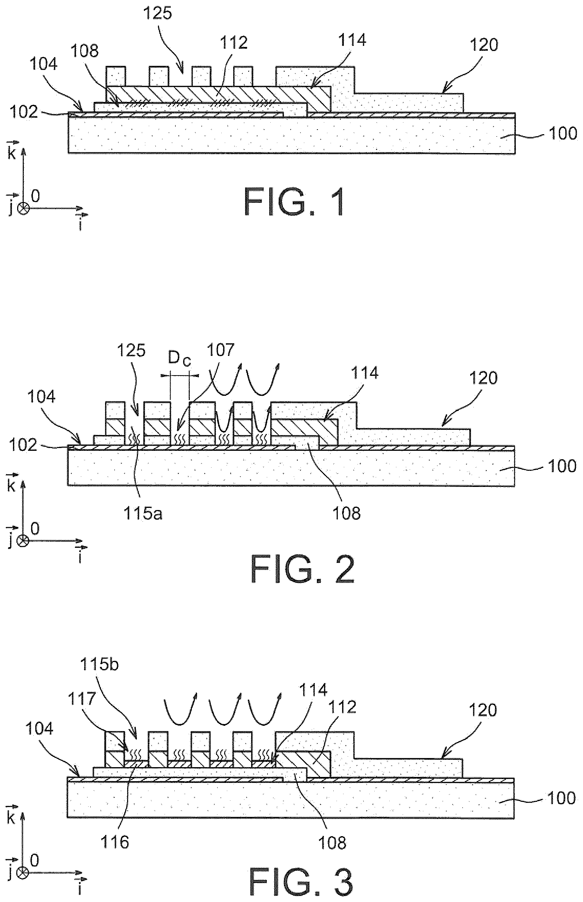

Un exemple de capteur d'humidité de type capacitif, mis en œuvre suivant l'invention, est donné sur la figure 1.

Ce capteur d'humidité est formé sur un support 100 ou une plaque 100 qui, du fait de sa composition et de son épaisseur, peut être flexible. Le support 100 peut être à base de matériau polymère tel que par exemple du PET (poly (éthylène téréphtalate)), ou du PEN (Poly (éthylène naphthalate)), ou du PI (polyimide).

Le support 100 peut également avoir une épaisseur comprise par exemple entre 25 µm et 200 µm.

Le capteur comprend une première électrode 104 également appelée « électrode inférieure », reposant sur le support 100, qui peut être sous forme d'une couche conductrice 102 par exemple à base de métal tel que de l'or, ou du platine, ou de l'argent, ou du cuivre. Cette couche conductrice 102 peut avoir une épaisseur comprise par exemple entre 30 et 300_nanomètres (l'épaisseur étant une dimension mesurée selon une direction parallèle au vecteur *̅k̅*̅ du repère orthogonal [O;*̅i̅*̅;*̅j̅*̅;*̅k̅*̅] défini sur les figures 1 à 3).

Selon une autre possibilité, la couche conductrice 102 peut être à base de graphène.

Une couche 102 de graphène disposée sur un matériau diélectrique peut permettre de détecter la présence d'humidité au niveau de l'interface graphène-matériau diélectrique, le graphène pouvant, au niveau de cette interface, devenir semi-conducteur en contact avec des molécules H₂O.

Une zone de matériau diélectrique 108 repose sur la première électrode 104. Ce matériau diélectrique 108 peut être un matériau faiblement absorbant ou peu perméable, voire imperméable à l'humidité.

Le matériau diélectrique 108 peut être choisi de manière à ne pas présenter d'affinité avec des molécules H₂O, et peut être éventuellement hydrophobe.

Le matériau diélectrique 108 peut présenter une faible affinité avec l'humidité, et pour cela avoir par exemple des pores de taille maximale ou de diamètre maximal de l'ordre de 4 nm.

Le matériau diélectrique 108 peut être, par exemple, à base d'un matériau polymère tel que du parylène ou du polyester, ou un polycarbonate ou un fluoropolymère de type poly(perfluoro butenyl vinyl ether) connu sous le nom de Cytop® à faible permittivité relative εᵣ, par exemple telle que εᵣ = 2,2.

La zone diélectrique 108 peut avoir une épaisseur comprise par exemple entre 100 nm et 2 µm.

La zone de matériau diélectrique 108 est recouverte d'une deuxième électrode 114 encore appelée « électrode supérieure » 114. La deuxième électrode 114 est formée à base d'une couche de matériau conducteur 112 dont la perméabilité à l'humidité est plus importante que celle du matériau diélectrique 108.

Ce matériau conducteur 112 est selon l'invention du graphène. Le graphène conducteur peut localement, lorsqu'il est en contact avec des molécules de H₂O présenter des propriétés d'un semi-conducteur avec un faible gap. De telles propriétés sont décrites par exemple dans le document de Yavari et al. "Tunable Bandgap in Graphene by the Controlled Asorption of Water Molecules", Wiley-VCH Verlag GmbH&Co.KGaA, Weinheim, 2010.

La couche de matériau conducteur 112 peut avoir une épaisseur comprise par exemple entre 100 nm et 5 µm, par exemple de l'ordre de 1 µm.

La première électrode 104, la zone diélectrique 108 et la deuxième électrode 114 forment une capacité variable en fonction de l'humidité.

Du fait du caractère absorbant en humidité de la deuxième électrode 114, et du caractère faiblement absorbant ou non absorbant de la zone diélectrique 108, la variation de capacité susceptible d'être détectée à l'aide d'un tel capteur, dépend d'une variation d'humidité à proximité de l'interface entre la deuxième électrode 114 et la zone diélectrique 108.

La deuxième électrode 114 peut être recouverte d'une couche de protection 120 diélectrique, hydrophobe, et ajourée, comportant des ouvertures 125 par lesquelles l'humidité est destinée à pénétrer.

La couche de protection 120 diélectrique hydrophobe est prévue avec une épaisseur comprise par exemple entre 1 µm et 15 µm, et de préférence supérieure à 5 µm, afin d'éviter la formation de capacité(s) parasite(s).

Sur la figure 2, un autre exemple de réalisation du capteur capacitif d'humidité selon l'invention est donné.

Dans cet exemple, dans le prolongement des ouvertures 125 traversant la couche diélectrique 120 hydrophobe, sont prévus des trous 115a traversant la couche de matériau conducteur 112 de la deuxième électrode 114, ainsi que la zone diélectrique 108.

Ces trous 115a servent au piégeage d'humidité et permettent également un séchage par convection des couches 112 et 108 du capteur qu'ils traversent.

Afin d'optimiser la sensibilité du capteur d'humidité, une couche 107 hydrophile SAM (SAM pour « Self Assembled Monolayer » ou mono-couche auto assemblée) peut être également prévue au fond des trous 115a sur la première électrode 104.

La couche hydrophile 107 SAM peut être par exemple à base de 2,2'-(Ethylenedioxy) diethanethiol, ou d'Hexa(ethylene glycol) dithiol, ou de Tetra(ethylene glycol) dithiol, ou de (11-Mercaptoundecyl)tetra(ethylene glycol), ou de (11-Mercaptoundecyl)hexa(ethylene glycol), ou de Triethylene glycol mono-11-mercaptoundecyl ether.

Les ouvertures 125, et les trous 115a dans le prolongement des ouvertures 125 ont une dimension critique Dc (mesurée selon une direction parallèle au plan [O;*̅i̅*̅;*̅j̅*̅] du repère orthogonal [O;*̅i̅*̅;*̅j̅*̅;*̅k̅*̅] défini sur les figures 1 à 4) qui peut être comprise entre 50 µm et 200 µm, par exemple de l'ordre de 100 µm.

Par « dimension critique » on entend la plus petite dimension d'un motif tel qu'un trou ou une ouverture réalisée dans une couche mince hormis son épaisseur.

Un autre exemple de réalisation du capteur est donné sur la figure 3.

Dans cet exemple, dans le prolongement des ouvertures 125 traversant la couche diélectrique 120 hydrophobe, sont prévus des trous 115b dévoilant une zone formée d'une couche 117 SAM hydrophile, la couche 117 SAM hydrophile reposant sur une zone métallique 116 de la deuxième électrode 114, elle-même étant disposée sur la zone diélectrique 108 de la capacité. Ces trous 115b servent au piégeage d'humidité. La zone métallique 116 forme une région de la deuxième électrode 114 reposant sur la zone diélectrique 108. La couche SAM 117 hydrophile permet d'améliorer la sensibilité du capteur. Les trous 115b permettent également un séchage par convection de la couche de matériau conducteur 112.

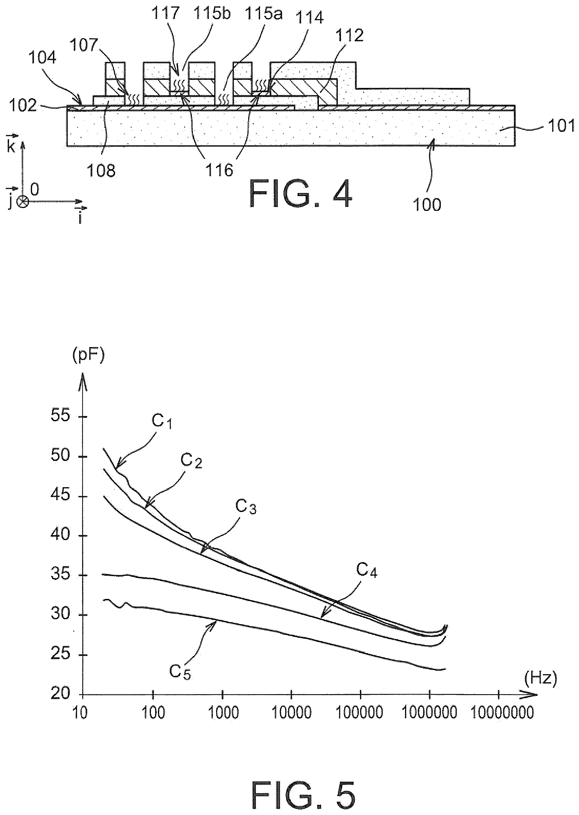

Un autre exemple de réalisation du capteur est donné sur la figure 4.

Dans cet exemple, le capteur comprend une alternance de trous 115a traversant la couche de matériau conducteur 112 de la deuxième électrode 114 et la zone diélectrique 108, et d'autres trous 115b traversant uniquement la couche de matériau conducteur 112 de la deuxième électrode 114.

Les trous 115a dévoilent une couche 107 SAM hydrophile, reposant sur la couche conductrice 102 de la première électrode 104.

Les autres trous 115b dévoilent quant à eux une couche 117 SAM hydrophile, reposant sur une zone métallique 116 de la deuxième électrode 114.

La figure 5 illustre, par le biais de courbes C₁, C₂, C₃, C₄, C₅ des résultats de mesures réalisées à l'aide d'un capteur d'humidité comportant une électrode à base de graphène. Dans cet exemple, la détection de l'humidité à l'interface graphène-diélectrique intervient surtout à basse fréquence. Le dispositif de détection peut être prévu pour fonctionner à très basse fréquence afin d'avoir un maximum de sensibilité.

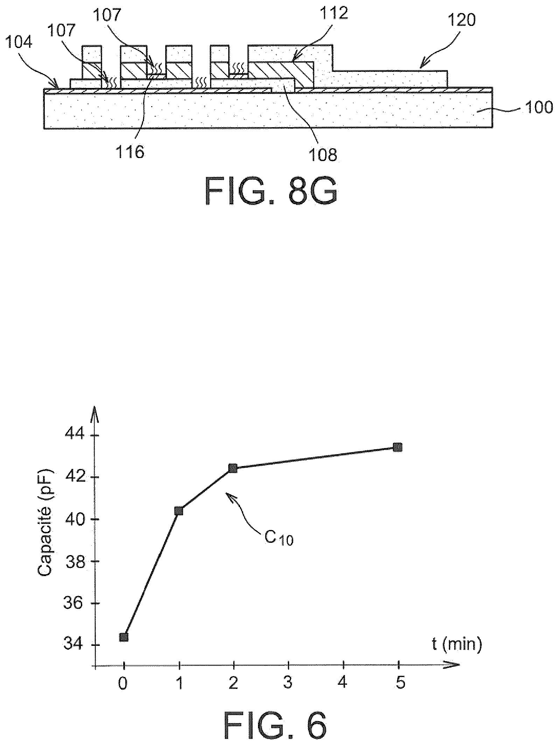

La figure 6 donne un exemple de courbe de variation de capacité en fonction du temps pour un capteur mis en œuvre suivant l'invention ayant une fréquence de fonctionnement de l'ordre de 100 Hz.

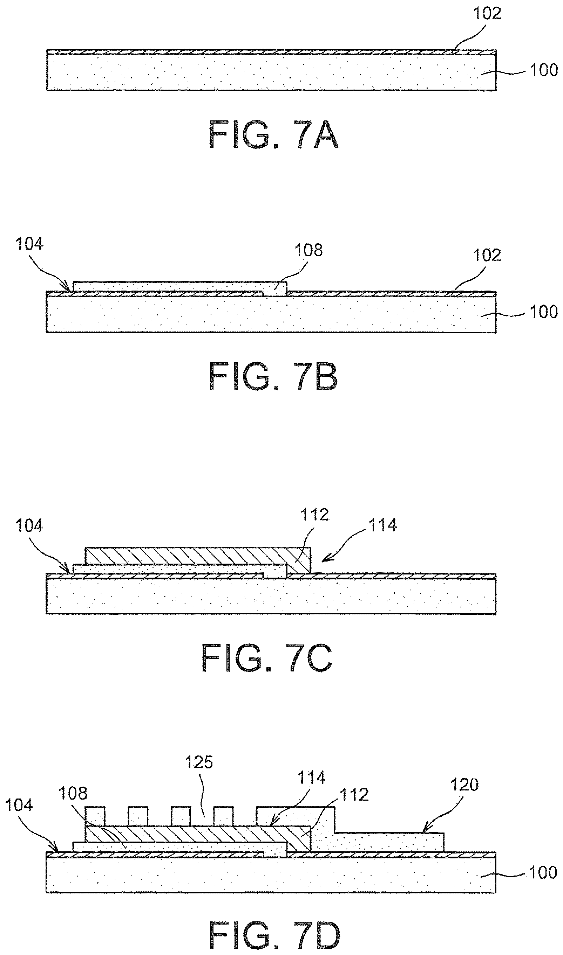

Un exemple de procédé de réalisation d'un capteur d'humidité de type capacitif suivant l'invention va à présent être donné en liaison avec les figures 7A à 7D.

Le matériau de départ de ce procédé peut être un support 100 par exemple sous forme d'un substrat à base de matériau polymère par exemple à base de PEN, ou de PET ou de PI. Le support 100 peut être également prévu avec une épaisseur comprise par exemple entre 25 µm et 200 µm et peut être flexible.

Ensuite, on forme une couche conductrice 102 sur une face du support 100. Cette couche conductrice 102 peut être à base d'un matériau métallique, par exemple à base d'or, ou de platine, ou de nickel, ou de cuivre, ou d'argent, ou d'aluminium, et avoir une épaisseur comprise par exemple entre 30 nm et 300 nm, ou de plusieurs micromètres dans le cas où la couche conductrice 112 déposée comporte des motifs.

La couche conductrice 102 peut être formée par dépôt PVD (dépôt physique en phase vapeur) ou par sérigraphie ou par jet d'encre (figure 7A).

Puis, après avoir gravé la couche conductrice 102 de manière à réaliser un motif d'électrode 104, on forme une couche de matériau diélectrique 108 (figure 7B).

Ce matériau diélectrique peut avoir une constante diélectrique faible par exemple telle que la permittivité relative εᵣ de ce matériau est comprise entre 2 et 3.

Le matériau diélectrique 108 est de préférence un matériau non poreux ou doté de pores de diamètre ou dimension maximale inférieure à 4 nm afin de le rendre peu perméable à l'humidité.

La couche de matériau diélectrique 108 peut être par exemple à base de polystyrène, ou de parylène, ou de polyester, ou de polycarbonate ou même de fluoropolymère de type poly(perfluoro butenyl vinyl ether) à faible constante diélectrique εᵣ, par exemple de l'ordre de 2. La couche de matériau diélectrique 108 peut être réalisée par exemple par dépôt de type CVD (dépôt chimique en phase vapeur), ou par jet d'encre, ou par sérigraphie, suivi éventuellement d'un recuit, par exemple autour de 100°C pendant par exemple une dizaine de minutes.

Ensuite, on forme une autre couche conductrice 112 sur la zone diélectrique 108 par dépôt d'une couche conductrice 112 perméable à l'humidité et à base d'un matériau dont la bande interdite est susceptible de varier en fonction de l'humidité. Ce matériau conducteur est selon l'invention du graphène. La couche conductrice 112 est destinée à former une deuxième électrode 114 du capteur.

La couche conductrice 112 peut également avoir une épaisseur comprise par exemple entre 100 nm et 5 µm. La couche conductrice 112 peut être formée par dépôt, ou impression par sérigraphie ou par jet d'encre (figure 7C).

Puis, on forme une couche de protection hydrophobe 120 sur la deuxième électrode 114 par exemple par dépôt sérigraphie, ou par jet d'encre.

Cette couche de protection 120 peut-être à base d'un matériau polymère organique hydrophobe. La couche de protection hydrophobe 120 peut avoir une épaisseur comprise par exemple entre 1 µm et 15 µm, suffisante pour éviter la formation de capacités parasites.

Des ouvertures 125 sont réalisées dans la couche 120, afin de permettre un accès à la deuxième électrode 114 (figure 7D).

Une variante de l'exemple de procédé précédemment décrit va à présent être donnée.

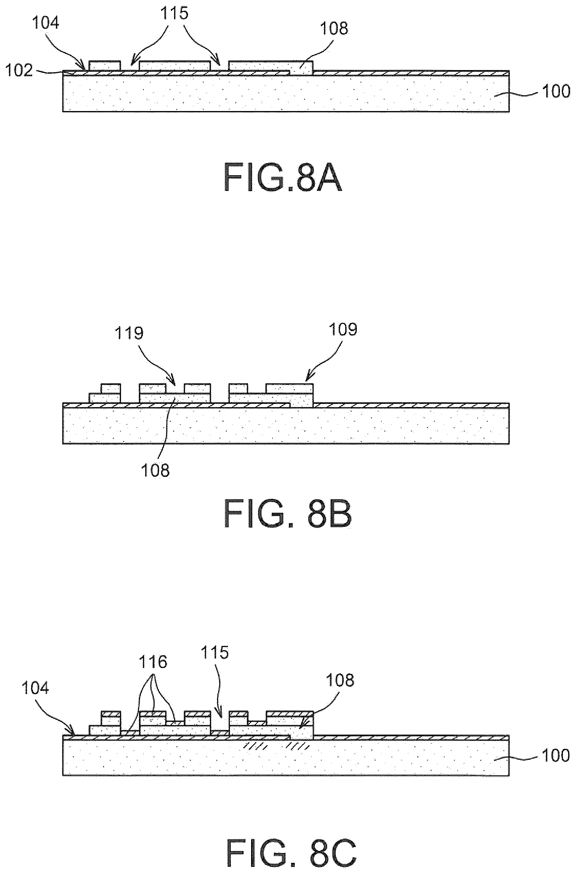

Pour cette variante, des trous 115 dévoilant la couche conductrice 102 formant la première électrode 104 sont réalisés dans la couche de matériau diélectrique 108 (figure 8A).

On forme ensuite un masquage sacrificiel 109 sur la couche de matériau diélectrique 108, comportant des trous 119 dévoilant le matériau diélectrique 108 (Figure 8B). Le masquage sacrificiel 109 peut être par exemple à base de résine photosensible, ou d'un matériau diélectrique déposé par exemple par sérigraphe ou par jet d'encre.

Ensuite, on effectue un dépôt d'une couche métallique 116 par exemple à base d'Au ou de Pt ou d'Ag ou de Ti, d'épaisseur qui peut être comprise par exemple entre 30 nm et plusieurs centaines de nanomètres. La couche métallique 116 est formée au fond des trous 119 traversant la couche de masquage sacrificielle 109, ainsi qu'au fond des trous 115 réalisés dans la couche diélectrique 108, les zones de la couche diélectrique 108 protégées par le masquage sacrificiel 109 n'étant quant à elles pas recouvertes par cette couche métallique 116 (figure 8C).

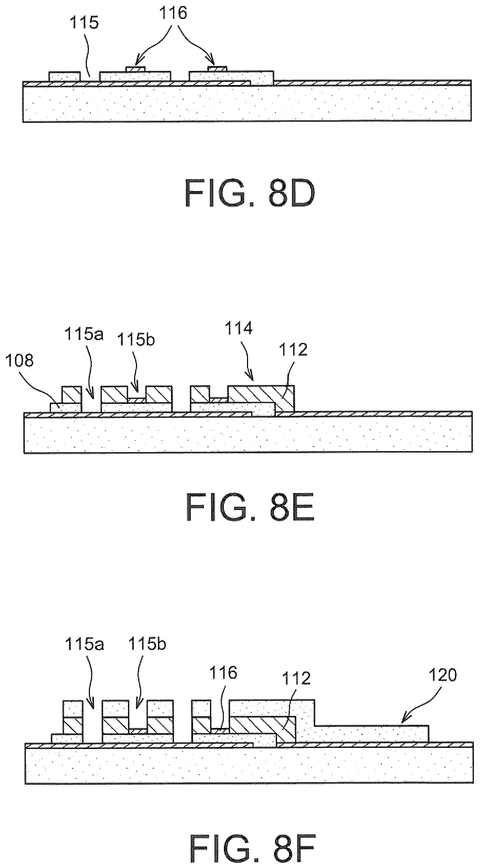

On retire ensuite la couche de masquage 109 sacrificielle (figure 8D).

Afin d'effectuer ce retrait lorsque la couche sacrificielle est à base de résine, on peut la dissoudre dans un solvant par exemple à base d'acétone. Cette couche de masquage sacrificielle peut être également éventuellement retirée à l'aide d'un plasma adapté.

On forme ensuite la deuxième électrode 114 sur la zone diélectrique 108, par exemple par dépôt d'une couche conductrice 112 de graphène par sérigraphie.

Cette couche conductrice 112 peut être éventuellement formée avec des trous. La couche conductrice 112 peut être dotée de trous 115a traversant la couche de graphène et situés dans le prolongement de ceux formés dans la couche diélectrique 108, ainsi que de trous 115b dévoilant les zones métalliques 116 formées sur la couche diélectrique 108 (figure 8E).

Puis, on forme la couche de protection 120 hydrophobe recouvrant la deuxième électrode 114.

Cette couche de protection 120 comporte des ouvertures 125 dans le prolongement de trous 115b traversant la couche de graphène et de trous 115a traversant à la fois la couche de graphène et celle de matériau diélectrique 108 (figure 8F).

On forme ensuite une couche SAM 107 polaire hydrophile au fond des trous dévoilant la première électrode 104 et des trous dévoilant la couche métallique 116 reposant sur la couche diélectrique 107 (figure 8G). La couche SAM polaire hydrophile peut être réalisée par trempage ou par évaporation.

Un capteur d'humidité tel que mis en œuvre suivant l'invention peut être également prévu au sein d'un dispositif de mesure de température, afin de d'effectuer une mesure de température par mesure d'une variation de capacité.

Pour rendre le capteur davantage sensible à des variations de température, on peut déposer un matériau métallique 212 sur la couche de matériau conducteur 112 formant l'électrode supérieure 114 du capteur. Ce matériau métallique 112 peut être destiné à se diffuser à l'intérieur du matériau conducteur 112.

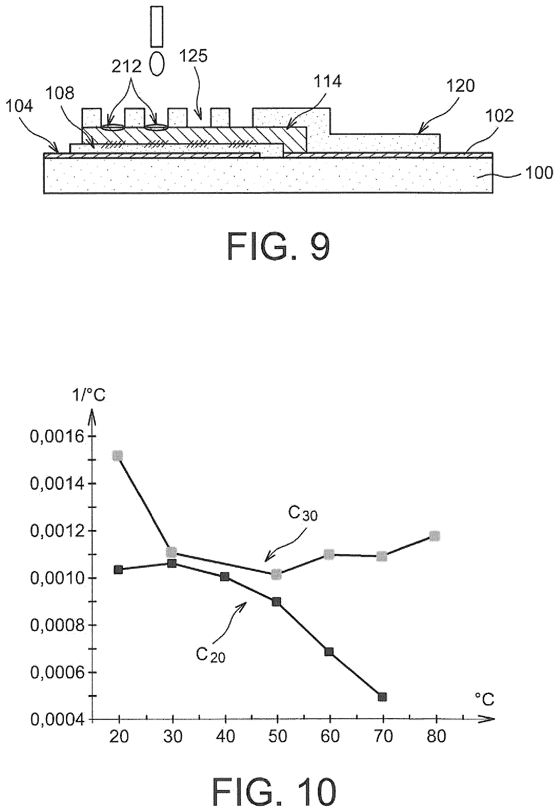

Dans le cas de la présente invention où le matériau conducteur 112 formant l'électrode supérieure 114 est du graphène, le matériau métallique 212 peut être par exemple de l'argent déposé sous forme de gouttes, par exemple par jet d'encre, à travers les ouvertures 125 de la couche de protection 120 (figure 9). Le fait d'ajouter des particules métalliques telles que des particules d'argent dans le graphène augmente son coefficient TCR (température coefficient of resistivity), qui correspond à un facteur de changement de résistivité par degré de température.

Sur la figure 10, des courbes C₂₀, C₃₀ illustrent des variations de coefficient TCR respectivement d'un élément constitué de graphène et d'un élément à base d'un matériau constitué de graphène et de particules d'Ag de l'ordre de 25% en poids.

## Revendications

1. Capteur d'humidité de type capacitif, comprenant : sur un support (100),
- une première électrode (104), reposant sur le support 100,
- une zone de matériau diélectrique (107) disposée entre ladite première électrode (104) et une deuxième électrode (114), la deuxième électrode étant formée d'une couche à base d'un matériau conducteur présentant une perméabilité à l'humidité supérieure à celle de ladite zone de matériau diélectrique avec laquelle elle se trouve en contact,
ladite couche à base d'un matériau conducteur étant à base de graphène,
la première électrode (104), la zone de matériau diélectrique (107) et la deuxième électrode (114) formant une capacité variable en fonction de l'humidité à proximité d'une interface entre la deuxième électrode (114) et la zone diélectrique (108).

2. Capteur d'humidité de type capacitif selon la revendication 1, ladite zone de matériau diélectrique étant imperméable à l'humidité.

3. Capteur d'humidité de type capacitif selon la revendication 1 ou 2, ladite zone de matériau diélectrique étant non poreuse ou comportant des pores de dimension maximale de 4 nm et/ou un taux de porosité maximum inférieur à 8%.

4. Capteur d'humidité de type capacitif selon l'une des revendications 1 à 3, ledit matériau diélectrique étant hydrophobe.

5. Capteur d'humidité de type capacitif selon l'une des revendications 1 à 4, des trous (115a) traversant ladite couche à base dudit matériau conducteur.

6. Capteur d'humidité de type capacitif selon la revendication 5, dans lequel des trous (115a) traversent ladite couche à base dudit matériau conducteur, au moins un trou (115a) parmi lesdits trous (115a, 115b) traversant en outre la zone de matériau diélectrique (108) et dévoilant la première électrode (104).

7. Capteur d'humidité de type capacitif selon la revendication 5, dans lequel des trous (115a) traversent ladite couche à base dudit matériau conducteur, lesdites trous comprenant une alternance de premiers trous (115a) et de deuxièmes trous (115b), les premiers trous (115a) traversant ladite couche à base dudit matériau conducteur et la zone de matériau diélectrique (108), les premiers trous (115a) dévoilant une mono-couche auto-assemblée (107) hydrophile sur la première électrode (104), les deuxièmes trous (115b) traversant la couche à base du matériau conducteur de la deuxième électrode (114), les deuxièmes trous (115b) dévoilant une mono-couche (117) auto-assemblée hydrophile reposant sur une zone métallique (116) de la deuxième électrode (114).

8. Capteur d'humidité selon la revendication 5, dans lequel des trous traversent ladite couche à base dudit matériau conducteur au moins un trou (115a) dévoilant une mono-couche auto-assemblée (107) hydrophile sur la première électrode (104).

9. Capteur d'humidité selon la revendication 5, dans lequel des trous traversent ladite couche à base dudit matériau conducteur au moins un trou (115b) dévoilant une mono-couche (117) auto-assemblée hydrophile sur la deuxième électrode (114).

10. Capteur selon l'une des revendications 1 à 9, ladite couche à base dudit matériau conducteur de la deuxième électrode (114) étant recouverte d'une couche de protection (120) hydrophobe ajourée.

11. Dispositif de mesure ou de détection d'humidité comprenant un capteur selon l'une des revendications 1 à 10.

12. Dispositif de mesure ou de détection de température comprenant un capteur selon l'une des revendications 1 à 10.

13. Dispositif de mesure ou de détection de température selon la revendication 12, ladite couche à base dudit matériau conducteur de la deuxième électrode (114) étant en graphène et comportant des particules de métal en particulier d'Ag.

14. Procédé de réalisation du capteur d'humidité de type capacitif selon la revendication 1, comprenant des étapes consistant à :
- former sur un support (100) au moins une couche conductrice d'une première électrode (104)
- former au moins une zone de matériau diélectrique (108) sur ladite couche conductrice de ladite première électrode,
- former sur ladite couche de matériau diélectrique une couche d'un matériau conducteur donné (112) présentant une perméabilité à l'humidité supérieure à celle de ladite zone de matériau diélectrique (108) avec laquelle elle se trouve en contact, la couche du matériau conducteur donné (112) étant à base de graphène.

15. Procédé selon la revendication 14, ladite zone de matériau diélectrique (108) étant imperméable à l'humidité ou étant à base d'un matériau présentant de faibles propriétés d'absorption d'humidité.

16. Procédé selon la revendication 15, ladite zone de matériau diélectrique (108) étant non poreuse ou comportant des pores de dimension maximale de 4 nm et/ou un taux à de porosité maximum inférieur à 8%.

17. Procédé selon l'une des revendications 14 à 16, ledit matériau diélectrique étant hydrophobe.

18. Procédé selon l'une des revendications 14 à 17, comprenant après la formation de la zone de matériau diélectrique et préalablement à la formation de la couche de matériau conducteur donné, des étapes consistant à :
- former un masquage sacrificiel (109) sur la zone de matériau diélectrique (108), puis
- former au moins une zone métallique (116) sur la zone de matériau diélectrique à travers des ouvertures (119) du masquage sacrificiel dévoilant la zone de matériau diélectrique,
- retirer le masquage sacrificiel, ladite couche de matériau conducteur donné (112) étant ensuite réalisée autour de ladite zone métallique (116) avec un trou (115b) traversant ladite couche de matériau conducteur donné (112) de manière à dévoiler cette zone métallique.

19. Procédé selon la revendication 18, comprenant en outre, après l'étape de retrait du masquage sacrificiel, une étape consistant à déposer une couche SAM hydrophile (107) sur la zone métallique.

20. Procédé selon l'une des revendications 14 à 19, dans lequel des trous (115a) traversant ladite couche à base dudit matériau conducteur donné sont prévus.

## Patentansprüche

1. Kapazitiver Feuchtigkeitssensor, enthaltend:
auf einem Träger (100)
- eine erste Elektrode (104), die auf dem Träger (100) aufliegt,
- einen Bereich aus dielektrischem Material (107), der zwischen der ersten Elektrode (104) und einer zweiten Elektrode (114) angeordnet ist, wobei die zweite Elektrode aus einer Schicht auf Basis von leitfähigem Material gebildet ist, das eine höhere Feuchtigkeitsdurchlässigkeit aufweist als der Bereich aus dielektrischem Material, mit dem sie in Kontakt steht,
wobei die Schicht auf Basis von leitfähigem Material auf Basis von Graphen besteht,
wobei die erste Elektrode (104), der Bereich aus dielektrischem Material (107) und die zweite Elektrode (114) eine feuchtigkeitsabhängig variable Kapazität nahe einer Grenzfläche zwischen der zweiten Elektrode (114) und dem dielektrischen Bereich (108) bilden.

2. Kapazitiver Feuchtigkeitssensor nach Anspruch 1, wobei der Bereich aus dielektrischem Material für Feuchtigkeit undurchlässig ist.

3. Kapazitiver Feuchtigkeitssensor nach Anspruch 1 oder 2, wobei der Bereich aus dielektrischem Material nicht porös ist oder Poren mit einer maximalen Abmessung von 4 nm und/oder einer maximalen Porosität von weniger als 8 % aufweist.

4. Kapazitiver Feuchtigkeitssensor nach einem der Ansprüche 1 bis 3, wobei das dielektrische Material hydrophob ist.

5. Kapazitiver Feuchtigkeitssensor nach einem der Ansprüche 1 bis 4, wobei Löcher (115a) durch die Schicht auf Basis von leitfähigem Material verlaufen.

6. Kapazitiver Feuchtigkeitssensor nach Anspruch 5, wobei durch die Schicht auf Basis von leitfähigem Material Löcher (115a) verlaufen, wobei zumindest ein Loch (115a) der Löcher (115a, 115b) ferner durch den Bereich aus dielektrischem Material (108) verläuft und die erste Elektrode (104) freilegt.

7. Kapazitiver Feuchtigkeitssensor nach Anspruch 5, wobei durch die Schicht auf Basis von leitfähigem Material Löcher (115a) verlaufen, wobei die Löcher eine Wechselfolge von ersten Löchern (115a) und zweiten Löchern (115b) aufweisen, wobei die ersten Löcher (115a) durch die Schicht auf Basis von leitfähigem Material und den Bereich aus dielektrischem Material (108) verlaufen, wobei die ersten Löcher (115a) eine hydrophile selbstorganisierte Monoschicht (107) auf der ersten Elektrode (104) freilegen, wobei die zweiten Löcher (115b) durch die Schicht auf Basis von leitfähigem Material der zweiten Elektrode (114) verlaufen, wobei die zweiten Löcher (115b) eine hydrophile selbstorganisierte Monoschicht (117) freigeben, die auf einem metallischen Bereich (116) der zweiten Elektrode (114) aufliegt.

8. Feuchtigkeitssensor nach Anspruch 5, wobei durch die Schicht auf Basis von leitfähigem Material Löcher verlaufenden, wobei zumindest ein Loch (115a) eine hydrophile selbstorganisierte Monoschicht (107) auf der ersten Elektrode (104) freilegt.

9. Feuchtigkeitssensor nach Anspruch 5, wobei durch die Schicht auf Basis von leitfähigem Material Löcher verlaufenden, wobei zumindest ein Loch (115b) eine hydrophile selbstorganisierte Monoschicht (117) auf der zweiten Elektrode (114) freilegt.

10. Sensor nach einem der Ansprüche 1 bis 9, wobei die Schicht auf Basis von leitfähigem Material der zweiten Elektrode (114) mit einer perforierten hydrophoben Schutzschicht (120) bedeckt ist.

11. Vorrichtung zum Messen bzw. Erfassen von Feuchtigkeit mit einem Sensor nach einem der Ansprüche 1 bis 10.

12. Vorrichtung zum Messen bzw. Erfassen einer Temperatur mit einem Sensor nach einem der Ansprüche 1 bis 10.

13. Vorrichtung zum Messen bzw. Erfassen einer Temperatur nach Anspruch 12, wobei die Schicht auf Basis von leitfähigem Material der zweiten Elektrode (114) Graphen ist und Metallteilchen, insbesondere aus Ag, enthält.

14. Verfahren zur Herstellung eines kapazitiven Feuchtigkeitssensors nach Anspruch 1, umfassend die folgenden Schritte:
- Ausbilden zumindest einer leitfähigen Schicht einer ersten Elektrode (104) auf einem Träger (100),
- Ausbilden zumindest eines Bereichs aus dielektrischem Material (108) auf der leitfähigen Schicht der ersten Elektrode,
- Ausbilden, auf der Schicht aus dielektrischem Material, einer Schicht aus gegebenem leitfähigen Material (112), das eine höhere Feuchtigkeitsdurchlässigkeit aufweist als der Bereich aus dielektrischem Material (108), mit dem sie in Kontakt steht,
wobei die Schicht aus gegebenem leitfähigen Material (112) auf Basis von Graphen besteht.

15. Verfahren nach Anspruch 14, wobei der Bereich aus dielektrischem Material (108) feuchtigkeitsundurchlässig ist oder auf Basis eines Materials mit geringen Feuchtigkeitsabsorptionseigenschaften besteht.

16. Verfahren nach Anspruch 15, wobei der Bereich aus dielektrischem Material (108) nicht porös ist oder Poren mit einer maximalen Abmessung von 4 nm und/oder einer maximalen Porosität von weniger als 8 % aufweist.

17. Verfahren nach einem der Ansprüche 14 bis 16, wobei das dielektrische Material hydrophob ist.

18. Verfahren nach einem der Ansprüche 14 bis 17, umfassend nach dem Ausbilden des Bereichs aus dielektrischem Material und vor dem Ausbilden der Schicht aus gegebenem leitfähigen Material die folgenden Schritte:
- Ausbilden einer Opfermaskierung (109) auf dem Bereich aus dielektrischem Material (108), dann
- Ausbilden zumindest eines metallischen Bereichs (116) auf dem Bereich aus dielektrischem Material durch Öffnungen (119) in der Opfermaskierung hindurch, die den Bereich aus dielektrischem Material freilegen,
- Entfernen der Opfermaskierung, wobei die Schicht aus gegebenem leitfähigen Material (112) dann um den metallischen Bereich (116) herum mit einem Loch (115b) gebildet wird, das durch die Schicht aus gegebenem leitfähigen Material (112) verläuft, um den metallischen Bereich freizulegen.

19. Verfahren nach Anspruch 18, ferner umfassend nach dem Schritt des Entfernens der Opfermaskierung einen Schritt des Aufbringens einer hydrophilen SAM-Schicht (107) auf den metallischen Bereich.

20. Verfahren nach einem der Ansprüche 14 bis 19, wobei durch die Schicht auf Basis von gegebenem leitfähigen Material verlaufende Löcher (115a) vorgesehen sind.

## Claims

1. Humidity sensor of the capacitive type comprising, on a support (100):
- a first electrode (104) lying on the support (100),
- a region of dielectric material (107) disposed between said first electrode (104) and a second electrode (114), the second electrode being formed by a layer based on a conductive material having a permeability to moisture greater to that of said region of dielectric material with which it is contact,
said layer based on a conductive material being based on graphene,
the first electrode (104), the region of dielectric material (107) and the second electrode (114) forming a moisture-dependent variable capacitance in the vicinity of an interface between the second electrode (114) and the dielectric region (108).

2. Capacitive-type humidity sensor according to claim 1, said region of dielectric material being impermeable to moisture.

3. Capacitive-type humidity sensor according to claim 1 or 2, said region of dielectric material being non-porous or comprising pores with a maximum dimension of 4 nm and/or a maximum porosity ratio of less than 8%.

4. Capacitive-type humidity sensor according to one of claims 1 to 3, said dielectric material being hydrophobic.

5. Capacitive-type humidity sensor according to one of claims 1 to 4, holes (115a) passing through the layer based on said conductive material.

6. Capacitive-type humidity sensor according to claim 5, wherein holes (115a) pass through the layer based on said conductive material, at least one hole (115a) among said holes also passing through the region of dielectric material (108) and revealing the first electrode (104).

7. The capacitive-type humidity sensor of claim 5, wherein holes (115a) pass through said layer based on said conductive material, said holes comprising alternating first holes (115a) and second holes (115b), the first holes (115a) passing through said layer based on said conductive material and the the region of dielectric material (108), the first holes (115a) revealing a hydrophilic self-assembled monolayer (107) on the first electrode (104), the second holes (115b) passing through the layer based on the conductive material of the second electrode (114), the second holes (115b) revealing a hydrophilic self-assembled monolayer (117) resting on a metal area (116) of the second electrode (114).

8. Humidity sensor according to claim 5, wherein holes (115a) pass through said layer based on said conductive material at least one hole (115a) revealing a hydrophilic self-assembled monolayer (107) on the first electrode (104).

9. Humidity sensor according to claim 5, wherein holes (115a) pass through said layer based on said conductive material at least one hole (115b) revealing a hydrophilic self-assembled monolayer (117) on the second electrode (114).

10. Sensor according to one of claims 1 to 9, said layer based on said given material of the second electrode (114) being covered with a perforated hydrophobic protective layer (120).

11. Device for measuring or detecting moisture, comprising a sensor according to one of claims 1 to 10.

12. Device for measuring or detecting temperature, comprising a sensor according to one of claims 1 to 10.

13. Device for measuring or detecting temperature according to claim 12, said layer based on said conductive material of the second electrode (114) being made of graphene and comprising metal particles in particular Ag.

14. Method for producing a capacitive-type humidity sensor according to claim 1, comprising steps consisting of:
- forming on a support (100) at least one conductive layer of a first electrode (104),
- forming at least one region of dielectric material on said conductive layer of said first electrode,
- forming on said layer of dielectric material a layer of a given conductive material having permeability to moisture greater than that of said region of dielectric material with which it is in contact, said given conductive material being graphene.

15. Method according to claim 14, said region of dielectric material being impermeable to moisture or being based on a material having weak humidity-absorption properties.

16. Method according to claim 15, said region of dielectric material being non-porous or comprising pores with a maximum dimension of 4 nm and/or a maximum porosity ratio of less than 8%.

17. Method according to one of claims 14 to 16, said dielectric material being hydrophobic.

18. Method according to one of claims 14 to 17, comprising, after the formation of the region of dielectric material and prior to the formation of the layer of given conductive material, steps consisting of:
- forming a sacrificial masking on the region of dielectric material, then
- forming at least one metal region on the region of dielectric material through openings in the sacrificial masking revealing the region of dielectric material,
- removing the sacrificial masking, said layer of given conductive material then being produced around said metallic region with a hole revealing said metallic region.

19. Method according to claim 18, further comprising, after the step of removing the sacrificial masking, a step consisting of depositing a hydrophilic SAM layer (107) on the metal region.

20. The method according to any of claims 14 to 19, wherein holes (115a) through said layer based on said given conductive material are provided.
